(19) Europäisches Patentamt
European Patent Office
Office européen des brevets

(11) **EP 4 441 559 B1**

(12) **FASCICULE DE BREVET EUROPEEN**

(45) Date de publication et mention de la délivrance du brevet:
**01.10.2025 Bulletin 2025/40**

(21) Numéro de dépôt: **22822182.6**

(22) Date de dépôt: **29.11.2022**

(51) Classification Internationale des Brevets (IPC):
**G02F 1/295** (2006.01)     **G02B 6/124** (2006.01)

(52) Classification Coopérative des Brevets (CPC):
**G02F 1/2955**

(86) Numéro de dépôt international:
**PCT/EP2022/083579**

(87) Numéro de publication internationale:
**WO 2023/099434 (08.06.2023 Gazette 2023/23)**

(54) **EMETTEUR OPTOELECTRONIQUE A ANTENNE RESEAU A COMMANDE DE PHASE COMPORTANT DES ANTENNES OPTIQUES ADAPTEES A EMETTRE UN RAYONNEMENT LUMINEUX SELON UN PROFIL D'EMISSION ET UNE DIRECTION PREDEFINIS**

OPTOELEKTRONISCHER EMITTER MIT PHASENGESTEUERTER GRUPPENANTENNE MIT OPTISCHEN ANTENNEN ZUR EMISSION VON LICHTSTRAHLUNG NACH EINEM VORGEGEBENEN EMISSIONSPROFIL UND IN VORGEGEBENER RICHTUNG

OPTOELECTRONIC EMITTER HAVING A PHASE-CONTROLLED ANTENNA ARRAY COMPRISING OPTICAL ANTENNAS SUITABLE FOR EMITTING LIGHT RADIATION ACCORDING TO A PREDEFINED EMISSION PROFILE AND IN A PREDEFINED DIRECTION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **01.12.2021 FR 2112786**

(43) Date de publication de la demande:
**09.10.2024 Bulletin 2024/41**

(73) Titulaire: **Commissariat à l'Energie Atomique et aux Energies Alternatives
75015 Paris (FR)**

(72) Inventeurs:
• **GUERBER, Sylvain
38054 GRENOBLE CEDEX 09 (FR)**
• **FOWLER, Daivid
38054 GRENOBLE CEDEX 09 (FR)**

(74) Mandataire: **INNOV-GROUP
209 Avenue Berthelot
69007 Lyon (FR)**

(56) Documents cités:
**US-B1- 10 983 273**

• ZHAO ZHEXIN ET AL: "Design Principles of Apodized Grating Couplers", JOURNAL OF LIGHTWAVE TECHNOLOGY, IEEE, USA, vol. 38, no. 16, 6 May 2020 (2020-05-06), pages 4435 - 4446, XP011801076, ISSN: 0733-8724, [retrieved on 20200727], DOI: 10.1109/JLT.2020.2992574
• HAN KYUNGHUN ET AL: "Highly directional waveguide grating antenna for optical phased array", CURRENT APPLIED PHYSICS, ELSEVIER, AMSTERDAM, NL, vol. 18, no. 7, 6 April 2018 (2018-04-06), pages 824 - 828, XP085387004, ISSN: 1567-1739, DOI: 10.1016/J.CAP.2018.04.004
• KOMLJENOVIC TIN ET AL: "On-chip calibration and control of optical phased arrays", vol. 26, no. 3, 30 January 2018 (2018-01-30), pages 3199, XP055798504, Retrieved from the Internet <URL:https://www.osapublishing.org/viewmedia.cfm?URI=oe-26-3-3199> DOI: 10.1364/OE.26.003199

**Description**

## DOMAINE TECHNIQUE

Le domaine de l'invention est celui des émetteurs optoélectroniques de type à antenne réseau à commande de phase réalisés de préférence sur une puce photonique de type photonique sur silicium. L'invention trouve une application notamment dans le domaine des LIDAR (*Light Detection and Ranging,* en anglais).

## ÉTAT DE LA TECHNIQUE ANTÉRIEURE

Les émetteurs optoélectroniques à antenne réseau à commande de phase (OPA, pour *Optical Phased Array,* en anglais) sont des dispositifs optoélectroniques permettant d'émettre en espace libre un rayonnement lumineux, monochromatique, de manière directionnelle. Ils trouvent une application notamment dans le domaine de la détection et de l'estimation d'une distance par laser (LIDAR), mais également dans le domaine des communications optiques en espace libre, des écrans holographiques et de l'imagerie médicale.

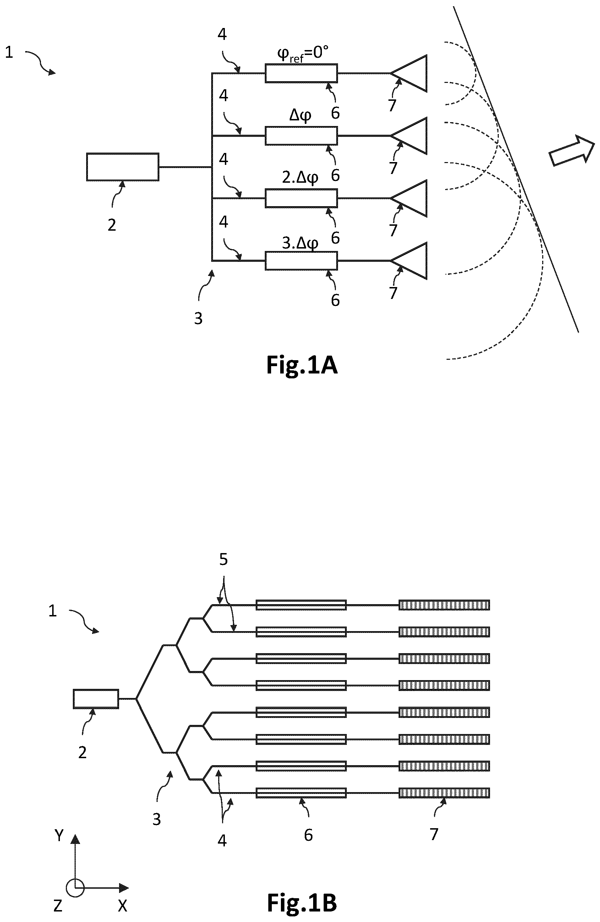

La figure 1A illustre de manière schématique le principe de fonctionnement d'un tel émetteur optoélectronique 1. Une source laser 2 émet un signal optique qui est distribué par un diviseur de puissance 3 dans des bras 4 de l'émetteur optoélectronique 1. Chaque bras 4 comporte un déphaseur 6, et un émetteur élémentaire 7 également appelé antenne optique. Chaque antenne optique 7 émet un signal optique en espace libre, par exemple par diffraction, les signaux optiques se combinant ensuite par interférence pour former un rayonnement lumineux. Celui-ci présente un diagramme d'émission en champ lointain déterminé notamment par la phase relative $\Delta\varphi$ appliquée par les déphaseurs 6 aux signaux optiques se propageant dans les bras 4.

De tels émetteurs optoélectroniques peuvent être réalisés en photonique intégrée, c'est-à-dire que ses différents composants optiques (guides d'onde, diviseur de puissance, antennes optiques...) sont réalisés sur et à partir d'une même puce photonique, par exemple dans le document US 10 983 273. A ce titre, la figure 1B illustre de manière schématique et partielle un exemple d'un tel émetteur optoélectronique 1 décrit dans l'article de Hulme et al intitulé Fully integrated hybrid silicon two dimensional beam scanner, Opt. Express 23 (5), 5861-5874 (2015). Cet émetteur optoélectronique 1 comporte une source laser 2, ici de type III-V, et est réalisé sur une même puce photonique. Il comporte donc une source laser 2 à semiconducteur, le diviseur de puissance 3, des guides d'onde 5, les déphaseurs 6 et les antennes optiques 7 situées dans les bras 4. Dans cet exemple, la source laser 2 est réalisée par report, sur la puce photonique (de type SOI), d'un matériau III-V suivi d'une structuration de celui-ci pour former le milieu à gain.

Par ailleurs, pour former en champ lointain un rayonnement lumineux peu divergent, il est nécessaire notamment que chaque antenne optique émette sur une grande longueur, par exemple sur une à plusieurs centaines de microns. Aussi, une solution consiste à diminuer le taux d'extraction des antennes optiques, par exemple en réalisant le réseau de diffraction non pas dans le guide d'onde mais à distance, par exemple au-dessus, de celui-ci, de sorte que seule la partie évanescente du mode optique soit sensible aux structurations périodiques du réseau de diffraction.

A ce titre, l'article de Han et al. intitulé Highly directonal waveguide grating antenna for optical phased array, Current Applied Physics, 18 (2018) 824-828 décrit un exemple d'antenne optique dans laquelle le réseau de diffraction est situé au-dessus et à distance d'un guide d'onde en silicium, et est formé dans la face supérieure de la gaine recouvrant le guide d'onde. Les valeurs des paramètres dimensionnels du guide d'onde et du réseau de diffraction restent constantes le long de l'antenne optique, et sont choisies notamment pour limiter les pertes optiques liées à des réflexions parasites et pour optimiser la directivité de l'antenne optique.

Par ailleurs, l'article de Wang et al. intitulé Silicon nitride assisted 1x64 optical phased array based on a SOI platform, Opt. Express 29(7), 10513-10517 (2021) décrit un autre exemple d'une antenne optique où le réseau de diffraction est situé au-dessus et à distance d'un guide d'onde en silicium, et formé ici de plots périodiques en un nitrure de silicium encapsulés dans une couche en un oxyde de silicium. Ici également, les valeurs des paramètres dimensionnels du guide d'onde et du réseau de diffraction restent constantes le long de l'antenne optique.

Cependant, le mode optique circulant dans le guide d'onde de l'antenne optique présente une puissance optique $P(x)$ qui diminue de manière exponentielle suivant l'axe longitudinal à mesure qu'une partie en est extraite. Aussi, pour un taux d'extraction $\alpha_r(x)$ du réseau de diffraction qui reste constant longitudinalement et égal à $\alpha_0$, le profil d'émission $S(x)$ en champ proche du rayonnement lumineux émis par l'antenne optique présente également une décroissance exponentielle suivant l'axe longitudinal, selon la relation $S(x) \sim \alpha_0 \times P(x)$, ce qui peut se traduire par une dégradation du diagramme d'émission en champ lointain du rayonnement lumineux.

Aussi, pour éviter cette réduction de la longueur d'émission effective de l'antenne optique, une solution pourrait être de moduler longitudinalement le taux d'extraction et donc de faire varier les valeurs des paramètres dimensionnels du réseau de diffraction suivant l'axe longitudinal. Cependant, cela conduirait à réaliser un réseau de diffraction ayant des dimensions des structurations périodiques particulièrement faibles, par exemple inférieures à 100nm, et donc peu ou pas compatibles avec les technologies conventionnelles habituellement utilisées dans les procédés de fabrication par exemple en photonique sur silicium.

## EXPOSÉ DE L'INVENTION

L'invention a pour objectif de remédier au moins en partie aux inconvénients de l'art antérieur, et plus particulièrement de proposer un émetteur optoélectronique à antenne réseau à commande de phase dont le rayonnement lumineux en champ lointain est peu divergeant et présente un diagramme d'émission prédéfini, par exemple constant ou gaussien. Pour cela, chaque antenne optique est adaptée à émettre un rayonnement lumineux selon un profil d'émission voulu $S_c(x)$ en champ proche, par exemple constant ou gaussien, et orienté suivant un angle d'émission prédéfini $\theta_c$ qui soit constant longitudinalement, sans qu'il soit nécessaire de réaliser des réseaux de diffraction aux dimensions trop petites.

Pour cela, l'objet de l'invention est un procédé de fabrication d'un émetteur optoélectronique à antenne réseau à commande de phase, lequel comporte : un diviseur, destiné à être couplé à une source laser; une pluralité de guides d'onde, couplés au diviseur et s'étendant suivant un axe longitudinal dans un plan principal, formant des bras de l'émetteur optoélectronique ; et une pluralité de déphaseurs et d'antennes optiques, disposés dans les bras, chaque antenne optique étant formée du guide d'onde correspondant et d'un réseau de diffraction situé au-dessus et à distance du guide d'onde suivant un axe vertical orthogonal au plan principal.

Le procédé comporte les étapes suivantes :

- définition d'un profil d'émission cible $S_c(x)$ en champ proche et d'un angle d'émission cible $\theta_c$ d'un rayonnement lumineux émis par chaque antenne optique, et d'une configuration structurelle $Cs_{ref}$ desdites antennes optiques, comportant : des valeurs de paramètres physiques $Pp_{wg}$ des guides d'onde définissant des propriétés optiques de transmission d'un mode optique provenant de la source laser; et des valeurs de paramètres physiques $Pp_r$ des réseaux de diffraction définissant des propriétés optiques de diffraction du mode optique ;
- détermination d'une relation $\Lambda_r=f(w_c)$ exprimant une évolution du pas $\Lambda_r$ de structurations périodiques du réseau de diffraction en fonction d'une largeur $w_c$ du guide d'onde, de sorte que, compte tenu de ladite configuration structurelle $Cs_{ref}$, un angle d'émission $\theta(x)$ du rayonnement lumineux émis par l'antenne optique est égal audit angle d'émission cible $\theta_c$ ;
- détermination d'une relation $\alpha_r=g(w_c)$ exprimant une évolution d'un taux d'extraction $\alpha_r$ du réseau de diffraction en fonction de la largeur $w_c$ du guide d'onde, compte tenu de ladite relation $\Lambda_r=f(w_c)$ et de ladite configuration structurelle $Cs_{ref}$ ;
- détermination d'une variation longitudinale $w_c(x)$ de la largeur $w_c$ du guide d'onde et déduction d'une variation longitudinale $\Lambda_r(x)$ correspondante du pas $\Lambda_r$ du réseau de diffraction à partir de ladite relation $\Lambda_r=f(w_c)$, de sorte que, compte tenu de ladite relation $\alpha_r=g(w_c)$ et de ladite configuration structurelle $Cs_{ref}$, un profil d'émission $S(x)$ en champ proche du rayonnement lumineux émis par l'antenne optique est égal audit profil d'émission cible $S_c(x)$ ;
- fabrication de l'émetteur optoélectronique dont les antennes optiques présentent la configuration structurelle de référence $Cs_{ref}$, complétée par ladite variation longitudinale $w_c(x)$ de la largeur $w_c$ du guide d'onde et de ladite variation longitudinale $\Lambda_r(x)$ du pas $\Lambda_r$ du réseau de diffraction.

Certains aspects préférés mais non limitatifs de cet émetteur optoélectronique sont les suivants.

Les étapes de détermination des relations $\Lambda_r=f(w_c)$ et $\alpha_r=g(w_c)$ peuvent être effectuées pour une gamme de largeur $w_c$ allant d'une valeur minimale $w_{c,out}$ et une valeur maximale $w_{c,in}$ prédéfinies.

L'étape de détermination de la variation longitudinale $w_c(x)$ peut comporter les opérations suivantes : définition d'une fonction puissance d'exposant n représentative d'une variation longitudinale $w_c(x)$ de la largeur $w_c$ entre la valeur maximale $w_{c,out}$ et la valeur minimale $w_{c,in}$ prédéfinies ; détermination, pour plusieurs valeurs $n_{(m)}$ de l'exposant n, d'une variation longitudinale $w_c=p_{(m)}(x)$ de la largeur $w_c$ du guide d'onde et déduction d'une variation longitudinale $\Lambda_r=q_{(m)}(x)$ correspondante du pas $\Lambda_r$ du réseau de diffraction ; et détermination d'une variation longitudinale $\alpha_{r(m)}(x)$ du taux d'extraction $\alpha_r$ correspondant à partir de ladite relation $\alpha_r=g(w_c)$, puis d'un profil d'émission $S_{(m)}(x)$ correspondant ; puis détermination d'une valeur optimale $n_{(mopt)}$ parmi les valeurs $n_{(m)}$ de l'exposant n, pour laquelle le profil d'émission $S_{(mopt)}(x)$ présente un écart minimal vis-à-vis du profil d'émission cible $S_c(x)$.

La fonction puissance peut être $w_c(x) = W_{c,in} + (x/L_a)^n \times (w_{c,in} - w_{c,out})$, où $L_a$ est la longueur totale de la partie de l'antenne optique qui présente les variations longitudinales de la largeur $w_c$ du guide d'onde et du pas $\Lambda_r$ du réseau de diffraction.

L'invention porte également sur un émetteur optoélectronique à antenne réseau à commande de phase, comportant : un diviseur destiné à être couplé à une source laser; une pluralité de guides d'onde couplés au diviseur et s'étendant suivant un axe longitudinal dans un plan principal, formant des bras de l'émetteur optoélectronique ; une pluralité de déphaseurs et d'antennes optiques disposés dans les bras, chaque antenne optique étant formée du guide d'onde correspondant et d'un réseau de diffraction situé au-dessus et à distance du guide d'onde suivant un axe vertical orthogonal au plan principal.

Selon l'invention, sur au moins une partie de la longueur de chaque antenne optique : le guide d'onde présente une largeur $w_c=p(x)$ variant longitudinalement selon une fonction p prédéfinie ; le réseau de diffraction présente un pas d'agencement $\Lambda_r=q(x)$ de structurations périodiques variant longitudinalement selon une fonction q prédéfinie ; les fonctions p et q étant prédéfinies de sorte qu'un profil d'émission $S(x)$ en champ proche du rayonnement lumineux émis par l'antenne optique est égal à un profil d'émission cible $S_c(x)$ prédéfini, et qu'un angle d'émission local $\theta(x)$ du rayonnement lumineux émis est égal à un angle d'émission cible $\theta_c$ prédéfini, constant longitudinalement.

La fonction p de variation longitudinale de la largeur $w_c$ peut être une fonction décroissante, et la fonction q de variation longitudinale du pas $\Lambda_r$ peut être une fonction croissance.

Chacune des structurations périodiques peuvent s'étendre en regard de tous les guides d'onde des antennes optiques.

Les guides d'onde et les réseaux de diffraction peuvent être réalisés dans une puce photonique à base de silicium.

Les structurations périodiques des réseaux de diffraction peuvent présenter un facteur de remplissage, défini comme le rapport entre une dimension transversale des structurations périodiques suivant l'axe longitudinal sur le pas $\Lambda_r$, constant suivant l'axe longitudinal des antennes optiques.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1A, déjà décrite, est une vue schématique et partielle d'un émetteur optoélectronique à antenne réseau à commande de phase selon un exemple de l'art antérieur;

la figure 1B, déjà décrite, est une vue de dessus, schématique et partielle, d'un tel émetteur optoélectronique réalisé en photonique intégré selon un exemple de l'art antérieur;

les figures 2A et 2B sont des vues schématiques et partielles, en coupe longitudinale et en vue de dessus, d'une antenne optique d'un émetteur optoélectronique selon un mode de réalisation, où elle comporte une partie apodisée présentant des variations longitudinales de la largeur du guide d'onde et du pas du réseau de diffraction ;

la figure 2C est une vue de dessus, schématique et partielle, d'une antenne optique d'un émetteur optoélectronique selon une variante de réalisation ;

la figure 3 est un organigramme illustrant des étapes d'un procédé de fabrication d'un émetteur optoélectronique similaire à celui de la fig.2B ;

la figure 4A illustre un exemple de relation $\Lambda_r=f(w_c)$ exprimant une évolution du pas $\Lambda_r$ du réseau de diffraction en fonction de la largeur $w_c$ du guide d'onde, de sorte que l'angle d'émission $\theta(x)$ en champ proche du rayonnement lumineux émis par l'antenne optique est égal à une valeur cible $\theta_c$ ;

la figure 4B illustre un exemple de relation $\alpha_r=f(w_c)$ exprimant une évolution du taux d'extraction $\alpha_r$ du réseau de diffraction en fonction de la largeur $w_c$ du guide d'onde, de sorte que l'angle d'émission $\theta(x)$ en champ proche du rayonnement lumineux émis par l'antenne optique est égal à une valeur cible $\theta_c$, et que le profil d'émission $S(x)$ en champ proche est égal au profil d'émission cible $S_c(x)$ ;

la figure 4C illustre un exemple de profil d'émission $S(x)$ d'un rayonnement lumineux émis pour une antenne optique comportant une partie apodisée suivie d'une partie non apodisée, et le profil d'émission cible $S_c(x)$.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un émetteur optoélectronique à antenne réseau à commande de phase, comportant une pluralité d'antennes optiques formées chacune d'un guide d'onde et d'un réseau de diffraction situé au-dessus et à distance du guide d'onde. Les antennes optiques sont de préférence réalisées sur une puce photonique de type photonique sur silicium. L'émetteur optoélectronique est adapté à émettre un rayonnement lumineux présentant un diagramme d'émission en champ lointain prédéfini, par exemple constant ou gaussien, orienté selon un angle d'émission prédéfini, et peu divergeant au moins dans un plan vertical parallèle aux antennes optiques.

Un diagramme d'émission en champ lointain est la répartition angulaire de l'intensité du rayonnement lumineux en champ lointain émis par l'émetteur optoélectronique, autour d'un axe principal orienté suivant l'angle d'émission. Le champ lointain (ou zone de Fraunhofer) correspond à une distance D supérieure au rapport entre le carré d'une grande dimension de l'antenne optique (ici, sa longueur $L_{tot}$ suivant l'axe longitudinal) sur la longueur d'onde $\lambda$ du rayonnement lumineux, et plus précisément : $D > 2L_{tot}^2/\lambda$.

Pour que l'émetteur optoélectronique émette un rayonnement lumineux dont le diagramme et l'angle d'émission en champ lointain correspondent à ce qui est attendu, les antennes optiques sont adaptées à émettre un rayonnement lumineux selon un profil et un angle d'émission en champ proche qui sont égaux à un profil et à un angle cibles prédéfinis. Dans la suite de la description, on parlera d'un diagramme d'émission en champ lointain de l'émetteur optoélectronique, et d'un profil d'émission S(x) (ou diagramme d'émission) en champ proche des antennes optiques, où x est l'abscisse longitudinal associé à l'antenne optique. Par ailleurs, on note également $\theta(x)$ l'angle d'émission local du rayonnement lumineux émis par l'antenne optique par rapport à un axe vertical Z.

On se réfère à nouveau à la figure 1B, décrite succinctement plus haut, pour décrire maintenant plus en détail des composants optiques de base d'un émetteur optoélectronique 1 selon un mode de réalisation.

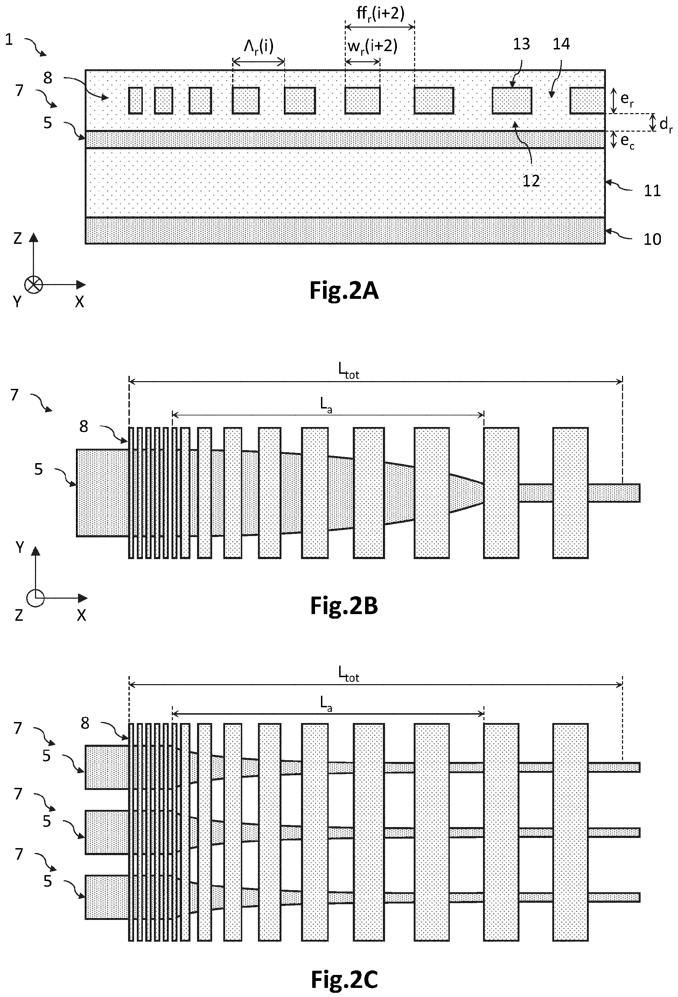

On définit ici et pour la suite de la description un repère direct orthonormé XYZ, où le plan XY est parallèle au plan de la puce photonique, l'axe X étant orienté suivant l'axe longitudinal des antennes optiques 7, et où l'axe Z étant orienté vers l'espace libre dans lequel le rayonnement lumineux est émis par l'émetteur optoélectronique 1. Les termes « inférieur » et « supérieur » sont relatifs à un éloignement vis-à-vis d'un substrat support 10 (cf. fig.2A) suivant la direction +Z.

Dans ce mode de réalisation, l'émetteur optoélectronique 1 est intégré sur une puce photonique, par exemple dans le cadre de la technologie dite photonique sur silicium. La puce photonique, également appelée circuit intégré photonique (PIC, pour *Photonic Integrated Circuit,* en anglais), comporte un substrat support 10 à partir duquel peuvent être réalisés des composants photoniques actifs (modulateurs, diodes...) et passifs (guides d'onde, multiplexeurs ou démultiplexeurs...) couplés optiquement les uns aux autres. Dans le cadre de la photonique sur silicium, le substrat support 10 et les composants photoniques sont réalisés à base de silicium. Le substrat support 10, illustré sur la fig.2A, peut ainsi être de type SOI (*Silicon On Insulator,* en anglais). Ainsi, dans cet exemple, les guides d'onde 5 sont en silicium.

Toutefois, de nombreuses autres plateformes technologiques peuvent être utilisées selon les applications visées et la longueur d'onde du rayonnement lumineux. Ainsi, on pourra réaliser les guides d'onde 5 par exemple en nitrure de silicium (SiN), en nitrure d'aluminium (AlN), en silice dopée, etc...

L'émetteur optoélectronique 1 comporte une source laser 2 adaptée à émettre un signal optique monochromatique pulsé ou continu, de longueur d'onde $\lambda$. La longueur d'onde peut être, à titre illustratif, égale à 1550nm. La source laser 2 peut être accordable en longueur d'onde, notamment pour modifier l'angle d'émission $\theta$ que forme le rayonnement lumineux émis par les antennes optiques 7 vis-à-vis de l'axe vertical Z dans le plan ZX. La source laser 2 peut être une source hybride formée d'un milieu à gain réalisé à base d'un composé III/V et collé à la surface de la puce photonique. Des réflecteurs optiques de type miroirs de Bragg peuvent ainsi être réalisés dans un guide d'onde intégré et couplé au milieu à gain. En variante, la puce photonique peut ne pas comporter la source laser 2, celle-ci étant alors être déportée et donc non assemblée sur la surface de la puce photonique. Elle peut alors être couplée à un guide d'onde intégré de la puce photonique, notamment par un coupleur à réseau.

Un diviseur de puissance 3 est couplé à la sortie de la source laser 2. Il comporte ainsi une entrée et une pluralité de sorties couplées chacune à un guide d'onde de l'émetteur optoélectronique 1. Le nombre de guides d'onde 5 correspond aux nombres de bras 4 de l'émetteur optoélectronique 1. Dans cet exemple, le diviseur de puissance 3 est formé de plusieurs diviseurs de type MMI (*Multimode Interferometer,* en anglais) agencés en cascade, mais d'autres types de composants optiques peuvent être utilisés.

L'émetteur optoélectronique 1 comporte une pluralité de guides d'onde 5 qui s'étendent entre une première extrémité couplée à l'une des sorties du diviseur de puissance 3 et une deuxième extrémité opposée. Chaque guide d'onde 5 est donc adapté à recevoir un signal optique issu du diviseur de puissance 3, et à permettre la propagation de ce signal optique jusqu'à une antenne optique 7.

L'émetteur optoélectronique 1 comporte également une pluralité de déphaseurs 6 disposés dans les bras 4. Plus précisément, un guide d'onde 5 est couplé à au moins un déphaseur adapté à modifier la phase du signal optique circulant dans le guide d'onde 5 considéré, et ainsi de générer une différence de phase $\Delta\varphi$, ou phase relative, entre les modes optiques circulant dans les guides d'onde 5 adjacents. Les déphaseurs 6 sont disposés entre le diviseur de puissance 3 et les antennes optiques 7. Chaque guide d'onde 5 peut être équipé d'un déphaseur, ou seulement une partie des guides d'onde 5, comme par exemple un guide d'onde 5 sur deux. De plus, un guide d'onde 5 de référence peut ne pas comporter de déphaseur.

Les déphaseurs 6 peuvent être des déphaseurs à effet électro-réfractif ou à effet thermo-optique. Dans les deux cas, la modification de la phase est obtenue par une modification de l'indice de réfraction $n_c$ du guide d'onde 5 considéré. Cette modification de l'indice de réfraction peut être obtenue par modification de la densité en porteurs libres dans le cas du déphaseur électro-réfractif, ou par modification de la température appliquée dans le cas du déphaseur thermo-optique.

Les déphaseurs 6 sont adaptés à appliquer une valeur prédéfinie $\Delta\varphi$ de phase relative aux modes optiques se propageant dans les guides d'onde 5, de manière à obtenir un angle $\Phi$ non nul déterminé de l'axe d'émission principal vis-à-vis de l'axe vertical Z dans le plan YZ (orthogonal à l'axe longitudinal X des antennes optiques 7). Cependant, la phase relative $\Delta\varphi$ peut ne pas être identique entre les guides d'onde 5, soit pour obtenir un diagramme en champ lointain différent, soit pour tenir compte et compenser d'éventuelles erreurs de phase. Ces erreurs de phase peuvent provenir d'une dégradation dans le temps de certains composants de l'émetteur optoélectronique 1, des non-uniformités lors du procédé de fabrication, des tolérances non nulles du procédé de fabrication, de l'impact de l'environnement de l'émetteur optoélectronique 1 (par ex., effet éventuel des éléments d'encapsulation (*packaging*) recouvrant les émetteurs élémentaires).

Les déphaseurs 6 sont de préférence connectés à un module de commande (non représenté). En fonction des signaux de commande envoyés par le module de commande, les déphaseurs 6 peuvent générer dans les signaux optiques circulant dans les différents guides d'onde 5 une phase relative $\Delta\varphi$ prédéterminée. Un exemple d'un tel module de commande est décrit dans l'article de Hulme et al intitulé Fully integrated hybrid silicon two dimensional beam scanner, Opt. Express 23 (5), 5861-5874 (2015), ou dans le document WO2021/130149A1.

L'émetteur optoélectronique 1 comporte une pluralité d'antennes optiques 7 disposées en aval des déphaseurs 6, à raison d'une antenne optique 7 par bras 4. La phase relative $\Delta\varphi$ entre les signaux optiques émis par les antennes optiques 7 détermine notamment la valeur de l'angle $\Phi$ que forme l'axe d'émission principal du faisceau lumineux en champ lointain vis-à-vis de l'axe vertical Z dans le plan YZ de l'émetteur optoélectronique 1.

Les figures 2A et 2B sont des vues partielles et schématiques, en coupe longitudinale (fig.2A) et en vue de dessus (fig.2B), de l'une des antennes optiques 7 selon un mode de réalisation. Chaque antenne optique 7 est formée par le guide d'onde 5 et un réseau de diffraction 8, lequel est situé au-dessus et à distance du guide d'onde 5 suivant l'axe vertical Z.

Selon l'invention, sur au moins une partie de la longueur de l'antenne optique 7, le guide d'onde 5 présente une variation longitudinale $w_c=p(x)$ de sa largeur $w_c$ selon une fonction p prédéfinie, et le réseau de diffraction 8 présente une variation longitudinale $\Lambda_r=q(x)$ du pas $\Lambda_r$ d'agencement des structurations périodiques selon une fonction q prédéfinie.

Les fonctions p et q sont prédéfinies de sorte que l'antenne optique 7 émette un rayonnement lumineux dont le profil d'émission S(x) en champ proche est égal à un profil d'émission cible $S_c(x)$ prédéfini, et qui est orienté selon un angle d'émission local $\theta(x)$ par rapport à l'axe vertical Z (et suivant la direction +Z) qui est égal à une valeur cible $\theta_c$ prédéfinie qui est constante longitudinalement.

Cette zone de l'antenne optique 7 qui comporte ces variations longitudinales $w_r(x)$ et $\Lambda_r(x)$ est une partie dite apodisée de l'antenne optique 7. Celle-ci peut comporter, en amont et/ou en aval, une partie non apodisée où la largeur $w_c$ du guide d'onde 5 et le pas $\Lambda_r$ du réseau de diffraction 8 restent constants. Par ailleurs, on note $L_{tot}$ la longueur totale de l'antenne optique 7, et $L_a$ la longueur de la partie apodisée.

Le guide d'onde 5 est défini par des paramètres physiques $Pp_{wg}$ qui sont représentatifs des propriétés de transmission du mode optique par le guide d'onde 5, et donc qui sont également représentatifs de la répartition spatiale de l'intensité du mode optique dans le plan transversal YZ. Ces paramètres physiques $Pp_{wg}$ sont ici l'indice de réfraction $n_c$ du guide d'onde 5 et l'indice de réfraction $n_g$ de la gaine, et les paramètres dimensionnels du guide d'onde 5 tels que l'épaisseur $e_c$ suivant l'axe vertical Z, et sa largeur $w_c$ suivant l'axe Y.

Le guide d'onde 5 et le réseau de diffraction 8 sont réalisés ici dans une puce photonique, ici en technologie photonique sur silicium. Celle-ci est formée d'un substrat support 10, ici réalisé en silicium, d'une couche inférieure 11 d'oxyde enterré (BOX en anglais, pour *Buried Oxide*) qui participe à former la gaine du guide d'onde, du guide d'onde 5 réalisé dans une couche de silicium, d'une couche d'espacement 12 réalisée en un oxyde de silicium, et ici de plots périodiques 13 réalisés par exemple en un nitrure de silicium encapsulés dans une couche de remplissage 14 en un oxyde de silicium.

De préférence, l'indice de réfraction $n_c$ du guide d'onde 5 (i.e. du cœur du guide d'onde 5) et son épaisseur $e_c$ restent constants sur toute la longueur $L_{tot}$ de l'antenne optique 7. En revanche, le guide d'onde 5 présente, dans la partie apodisée, une variation longitudinale $w_c(x)$ de sa largeur $w_c$ entre une valeur amont $w_{c,in}$ et une valeur aval $w_{c,out}$. La largeur $w_c$ varie ainsi longitudinalement selon une fonction p prédéfinie telle que $w_c=p(x)$. A titre d'exemple, dans le cas d'un profil cible $S_c(x)$ gaussien, la fonction p est une fonction monotone décroissante.

Cette variation longitudinale $w_c(x)$ de la largeur $w_c$ du guide d'onde 5 se traduit par une variation longitudinale $n_{eff}(x)$ de l'indice effectif $n_{eff}$ du mode optique circulant dans le guide d'onde 5, dans la mesure où l'indice effectif d'un mode optique dépend des dimensions transversales du guide d'onde 5. D'une manière générale, l'indice effectif $n_{eff}$ associé à un mode optique supporté par un guide d'onde est défini comme le produit de la constante de propagation β et de λ/2π. La constante de propagation β dépend de la longueur d'onde λ du mode optique, ainsi que des propriétés du guide d'onde (indice de réfraction $n_c$ et $n_g$, et dimensions transversales $e_c$ et $w_c$). L'indice effectif $n_{eff}$ du mode optique correspond, d'une certaine manière, à l'indice de réfraction du guide d'onde 'vu' par le mode optique. Il est habituellement compris entre l'indice de réfraction $n_c$ du guide d'onde et l'indice de réfraction $n_g$ de la gaine.

Ainsi, la variation longitudinale $w_c(x)$ de la largeur $w_c$ du guide d'onde 5 entraîne une variation longitudinale $n_{eff}(x)$ de l'indice effectif $n_{eff}$ et donc une modification de la répartition spatiale du mode optique suivant l'axe longitudinal X, ce qui contribue à déterminer l'influence locale du réseau de diffraction 8 sur la partie évanescente du mode optique, tant en termes de taux d'extraction que d'angle d'émission. En effet, à ce titre, rappelons que l'angle d'émission θ(x) du rayonnement lumineux par un réseau de diffraction 8 peut être déterminé par la relation suivante :

$$\sin \theta(x) = \frac{n_{eff}(x) + m\frac{\lambda}{\Lambda}}{n_c}$$

où m est l'ordre de diffraction.

Il apparaît donc que pour garder l'angle d'émission θ(x) égal à la valeur cible $θ_c$ et constant suivant l'axe longitudinal X, il importe de définir également une variation longitudinale $\Lambda_r(x)$ du pas $\Lambda_r$ du réseau de diffraction 8.

L'antenne optique 7 comporte donc un réseau de diffraction 8 qui n'est pas réalisé directement dans le guide d'onde 5, mais est situé au-dessus et à distance de celui suivant l'axe vertical Z. Il en est donc espacé d'une distance $d_r$ non nulle définie comme la distance entre la surface supérieure du guide d'onde 5 et la surface inférieure des structurations périodiques du réseau de diffraction 8. A noter que cette distance $d_r$ peut être nulle. Quoi qu'il en soit, le réseau de diffraction 8 n'est pas réalisé dans le guide d'onde 5, par exemple par gravure partielle localisée de celui-ci.

Le réseau de diffraction 8 est formé de structurations périodiques agencées le long du guide d'onde 5 suivant l'axe longitudinal X. Différents types de structurations sont possibles. Dans cet exemple où le réseau de diffraction 8 est du même type que celui de l'article de Wang 2021 mentionné précédemment, les structurations périodiques sont formées de plots 13 d'un matériau de haut indice de réfraction, ici un nitrure de silicium, séparés les uns des autres par une échancrure traversante remplie d'un matériau de bas indice de réfraction (identique à celui de la gaine entourant le guide d'onde 5, et ici en un oxyde de silicium). Les échancrures sont ici traversantes mais pourraient ne pas l'être. En variante, le réseau de diffraction 8 pourrait être du même type que celui de l'article de Han 2018 mentionné précédemment, c'est-à-dire être formé d'échancrures pratiquées dans la face supérieure de la couche de gaine du guide d'onde 5.

Le réseau de diffraction 8 est défini par des paramètres physiques $Pp_r$ qui sont représentatifs de la diffraction (et donc de l'extraction) de la partie évanescente du mode optique, à savoir ici l'espacement $d_r$ du réseau de diffraction 8 vis-à-vis du guide d'onde 5, les indices de réfraction des structurations, à savoir ici $n_r$ pour les plots 13 en nitrure de silicium et $n_{mr}$ pour le matériau de la couche de remplissage 14, l'épaisseur $e_r$ des plots 13, la largeur $w_r$ des plots 13 suivant l'axe longitudinal X, le pas $\Lambda_r$ et le facteur de remplissage $ff_r = w_r/\Lambda_r$ défini comme le rapport entre la largeur $w_r$ et le pas $\Lambda_r$.

De préférence, l'indice de réfraction $n_r$, l'épaisseur $e_r$ et la largeur $w_r$ des plots 13 restent constants sur toute la longueur $L_{tot}$ de l'antenne optique 7. De même, les échancrures restent traversantes. Le facteur de remplissage $ff_r$ reste ici constant, mais il pourrait également présenter une variation longitudinale. En revanche, le réseau de diffraction 8 présente, dans la partie apodisée, une variation longitudinale $\Lambda_r(x)$ de son pas $\Lambda_r$ entre une valeur amont $\Lambda_{r,in}$ et une valeur aval $\Lambda_{r,out}$. Le pas $\Lambda_r$ varie ainsi longitudinalement selon une fonction q prédéfinie telle que $\Lambda_r=q(x)$. A titre d'exemple, dans le cas d'un profil cible $S_c(x)$ gaussien, la fonction q est une fonction monotone croissante. On peut noter de manière discrétisée la variation longitudinale $\Lambda_r(i)$ du pas $\Lambda_r$, à l'aide d'un indice i variant de 1 à M, où M est le nombre de périodes du réseau de diffraction 8 dans la partie apodisée.

Le réseau de diffraction 8 est situé à une distance $d_r$ du guide d'onde 5 de manière à impacter faiblement le mode optique, et ici seulement sa partie évanescente, cette distance $d_r$ pouvant être nulle ou non nulle. Il présente un taux d'extraction α, parfois également appelé force d'émission en français, et *emission strength* ou *scattering strength* en anglais. Comme indiqué dans l'article de Zhao et al. intitulé Design principles of apodized grating couplers, Journal of Lightware Technology, vol. 38, no. 16, pp. 4435-4446, 2020, la puissance optique locale extraite, qui définit le profil d'émission S(x), dépend de la puissance locale du mode optique P(x) (ici de sa partie évanescente) et de la force d'extraction α(x) par la relation suivante : S(x) ~ α(x)×P(x).

Les antennes optiques 7 sont identiques entre elles. Elles présentent toute la même configuration structurelle de référence $Cs_{ref}$, laquelle est formée par les paramètres physiques $Pp_{wg}$ du guide d'onde 5 (et donc par la variation longitudinale $w_c(x)$) et par les paramètres physiques $Pp_r$ du réseau de diffraction 8 (et donc par la variation longitudinale $\Lambda_r(x)$). Les antennes optiques 7 sont agencées latéralement suivant l'axe Y et parallèles entre elles. Elles sont espacées les unes des autres d'une distance de préférence comprise entre λ/2 et 2λ. A titre informatif, le nombre d'antennes optiques 7 peut aller d'une dizaine à une dizaine de milliers, de manière à limiter la divergence du rayonnement lumineux en champ lointain dans le plan YZ.

Ainsi, les signaux optiques circulant dans les bras 4 sont progressivement transmis en espace libre par diffraction par les antennes optiques 7, de sorte que le rayonnement lumineux émis par chaque antenne optique 7 présente le profil d'émission cible $S_c(x)$ et l'angle d'émission cible $\theta_c$ constant suivant l'axe longitudinal X. Les rayonnements lumineux émis se propagent en espace libre, se recombinent par interférence, et forment ainsi en champ lointain le rayonnement lumineux émis par l'émetteur optoélectronique 1 dont la répartition angulaire autour de l'axe d'émission principal est déterminée et définit le diagramme d'émission en champ lointain de l'émetteur optoélectronique 1.

Ainsi, l'émetteur optoélectronique 1 émet un rayonnement lumineux en champ lointain qui peut être peu divergeant au moins dans le plan XZ, et présenter un diagramme d'émission prédéfini, par exemple constant ou gaussien. Ceci est donc obtenu par le fait que chaque antenne optique 7 comporte un réseau de diffraction 8 situé au-dessus et à distance du guide d'onde 5, ce qui permet de réduire le taux d'extraction $\alpha_r$ en n'impactant que la partie évanescente du mode optique circulant dans le guide d'onde 5, et donc d'augmenter la longueur d'émission de l'antenne optique 7. De plus, la valeur locale du taux d'extraction $\alpha_r$ peut être facilement ajustée par le biais de la largeur $w_c$ du guide d'onde 5, contrairement aux réseaux de diffraction apodisés de l'art antérieur où les auteurs modifient uniquement les dimensions des structurations périodiques, comme le montre par exemple l'article de Mekis et al. intitulé A Grating-Coupler-Enabled CMOS Photonics Platform, IEEE Journal of Selected Topics in Quantum Electronics, vol. 17, no. 3, pp. 597-608, May-June 2011. Enfin, par le fait de faire varier longitudinalement la largeur $w_c$ du guide d'onde 5 et au moins le pas $\Lambda_r$ du réseau de diffraction 8, on limite les contraintes de dimensionnement des structurations périodiques qui pourraient conduire à des dimensions (largeur $w_r$ des plots 13 et/ou des échancrures) particulièrement faibles, par exemple inférieures à 100nm, et donc peu ou pas compatibles avec les technologies conventionnelles habituellement utilisées dans les procédés de fabrication par exemple en photonique sur silicium.

La figure 2C est une vue de dessus d'une antenne optique 7 d'un émetteur optoélectronique 1 selon une variante de réalisation. Dans cet exemple, les réseaux de diffraction 8 partagent les mêmes plots 13. Autrement dit, les plots 13 des réseaux de diffraction 8 s'étendent continûment en regard des guides d'onde 5 des antennes optiques 7. Par ailleurs, les guides d'onde 5 présentent une variation longitudinale $w_c(x)$ d'une forme différente de celle illustrée sur la fig.2B.

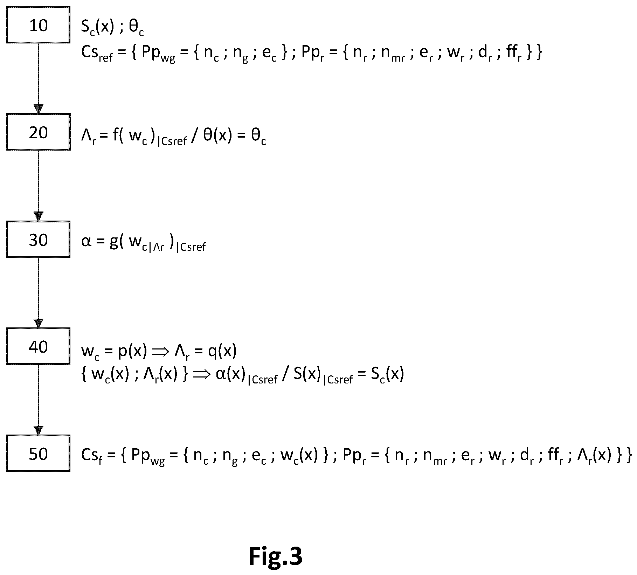

La figure 3 est un organigramme d'un procédé de fabrication d'un émetteur optoélectronique 1 selon un mode de réalisation.

Lors d'une étape 10, on définit le profil d'émission cible $S_c(x)$ en champ proche du rayonnement lumineux à émettre par chaque antenne optique 7, ainsi que l'angle d'émission cible $\theta_c$. A titre d'exemple, le profil d'émission $S_c(x)$ est gaussien. Par ailleurs, l'angle d'émission cible $\theta_c$ est constant pour toute valeur x de l'axe longitudinal X. On considère ici que le mode optique présente une longueur d'onde $\lambda$ égale par exemple à 1550nm.

De plus, on définit une même configuration structurelle de référence $Cs_{ref}$ pour les antennes optiques 7. Cette configuration structurelle $Cs_{ref}$ comporte les valeurs des paramètres physiques $Pp_{wg}$ du guide d'onde 5 qui définissent les propriétés optiques de transmission du mode optique par le guide d'onde 5, à savoir les indices de réfraction $n_c$ et $n_g$ du guide d'onde 5 et de la gaine, et l'épaisseur $e_c$ du guide d'onde 5, de sorte que l'on a : $Pp_{wg} = \{n_c, n_g, e_c\}$. A titre d'exemple, le guide d'onde 5 peut être en silicium et présenter un indice de réfraction $n_c$ de 3.48, et la gaine être en $SiO_2$ et présenter un indice de réfraction $n_g$ de 1.45 à la longueur d'onde $\lambda$ de $1.55\mu m$. Par ailleurs, le guide d'onde 5 présente ici une épaisseur constante $e_c$ égale à 220nm. La liste de ces paramètres physiques $Pp_{wg}$ sera complétée par la variation longitudinale $w_c(x)$ de la largeur $w_c$ du guide d'onde 5, qui est déterminée plus loin.

La configuration structurelle $Cs_{ref}$ comporte également les valeurs des paramètres physiques $Pp_r$ du réseau de diffraction 8 qui définissent les propriétés optiques de diffraction du mode optique par le réseau de diffraction 8. Ainsi, les paramètres physiques $Pp_r$ peuvent comporter l'indice de réfraction $n_r$ des plots 13 de haut indice, ici égal à 2.0 pour du nitrure de silicium, l'indice de réfraction du matériau de remplissage $n_{mr}$, ici égal à 1.45 pour du $SiO_2$, l'épaisseur $e_r$ des plots 13, par exemple égale à 400nm, et l'espacement $d_r$ avec le guide d'onde 5, par exemple égal à 200nm. Le facteur de remplissage $ff_r$ est ici constant suivant l'axe longitudinal X et est ici égal à 0.5. Connaissant plus loin la variation longitudinale $\Lambda_r(x)$ du pas $\Lambda_r$ le facteur de remplissage $ff$ permet de déterminer la largeur $w_r$ des plots 13. La liste de ces paramètres physiques $Pp_r$ sera complétée par la variation longitudinale $\Lambda_r(x)$ du pas $\Lambda_r$ du réseau de diffraction 8, qui sera déterminée plus loin.

Lors d'une étape 20, on détermine une relation $\Lambda_r=f(w_c)$ exprimant une évolution du pas $\Lambda_r$ du réseau de diffraction 8 en fonction de la largeur $w_c$ du guide d'onde 5, compte tenu de la configuration structurelle $Cs_{ref}$, de sorte que l'angle d'émission local $\theta$ est égal à l'angle d'émission cible $\theta_c$ pour tout x suivant l'axe longitudinal X.

Pour cela, on réalise ici plusieurs simulations tridimensionnelles d'une antenne optique 7 par différences finies dans le domaine temporel (FDTD, pour *Finite Difference Time Domain,* en anglais). A chaque simulation, l'antenne optique 7 présente la configuration structurelle de référence $Cs_{ref}$ et un couple donné de valeurs constantes de largeur $w_c$ et de pas $\Lambda_r$. Aussi, l'antenne optique 7 ne présente pas de variation longitudinale de sa largeur $w_c$ ni de son pas $\Lambda_r$ (elle n'est pas apodisée). Pour chaque simulation, on détermine la valeur de l'angle d'émission $\theta$ de l'antenne optique 7 simulée.

On obtient ainsi une relation entre l'angle d'émission $\theta$ de l'antenne optique 7 simulée en fonction, par exemple, du pas $\Lambda_r$ pour différentes valeurs de largeur $w_c$. Puis, pour une valeur de l'angle d'émission simulé $\theta$ égale à la valeur cible

$\theta_c$, on obtient la relation $\Lambda_r = f(w_c)$ pour laquelle l'antenne optique 7 émet le rayonnement lumineux à l'angle d'émission cible $\theta_c$.

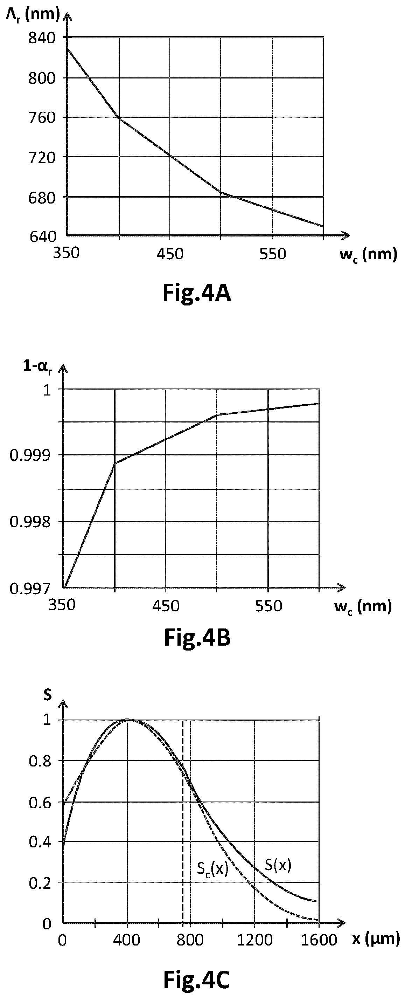

A ce titre, la figure 4A illustre un exemple d'évolution du pas $\Lambda_r$ du réseau de diffraction 8 en fonction de la largeur $w_c$ du guide d'onde 5, pour la configuration structurelle de référence $Cs_{ref}$ définie précédemment, et pour laquelle l'angle d'émission $\theta$ de l'antenne optique simulée est égale à une valeur cible $\theta_c$, ici égale à 8°. Les simulations sont réalisées pour balayer une gamme de valeurs de la largeur $w_c$, entre une valeur minimale ici égale à 350nm et une valeur maximale ici égale à 600nm.

Lors d'une étape 30, on détermine une relation $\alpha_r = g(w_c)$ exprimant une évolution d'un taux d'extraction $\alpha_r$ du réseau de diffraction 8 en fonction de la largeur $w_c$ du guide d'onde 5, compte tenu de la configuration structurelle de référence $Cs_{ref}$ et de la relation $\Lambda_r = f(w_c)$ déterminée précédemment (donc pour laquelle l'angle d'émission $\theta(x)$ est égal à la valeur cible $\theta_c$).

Pour cela, on réalise ici plusieurs simulations tridimensionnelles d'une antenne optique 7 par différences finies dans le domaine temporel (FDTD). A chaque simulation, l'antenne optique 7 présente la configuration structurelle de référence $Cs_{ref}$ et une valeur constante de largeur $w_c$, et on en déduit la valeur du pas $\Lambda_r$ correspondant à partir de la relation $\Lambda_r = f(w_c)$. Aussi, l'antenne optique 7 ne présente pas de variation longitudinale de sa largeur $w_c$ ni de son pas $\Lambda_r$ (elle n'est pas apodisée), et on sait que l'angle d'émission correspondant est égal à la valeur cible $\theta_c$. Pour chaque simulation, on détermine la valeur du taux d'extraction $\alpha_{r,sim}$ de l'antenne optique 7 simulée, c'est-à-dire le rapport de la valeur de l'intensité du mode optique diffracté sur la valeur de l'intensité du mode optique introduit dans le guide d'onde 5.

On obtient ainsi la relation $\alpha_r = g(w_c)$ entre le taux d'extraction $\alpha_r$ de l'antenne optique 7 simulée en fonction de la largeur $w_c$, pour laquelle le pas $\Lambda_r$ respecte la relation $\Lambda_r = f(w_c)$ pour laquelle l'antenne optique 7 émet le rayonnement émis à l'angle d'émission cible $\theta_c$.

A ce titre, la figure 4B illustre un exemple d'évolution du taux d'extraction $\alpha_r$ (ici de 1-$\alpha_r$) du réseau de diffraction 8 en fonction de la largeur $w_c$ du guide d'onde 5, pour la configuration structurelle de référence $Cs_{ref}$ définie précédemment, et pour laquelle l'angle d'émission $\theta$ de l'antenne optique simulée est égal à une valeur cible $\theta_c$ égale à 8°. Les simulations sont réalisées pour la gamme de largeur $w_c$ allant de 350nm à 600nm.

Lors d'une étape 40, on détermine une variation longitudinale $w_c(x)$ de la largeur $w_c$ du guide d'onde 5, se traduisant par une variation longitudinale $\alpha_r(x)$ du taux d'extraction $\alpha_r$ pour laquelle le profil d'émission $S(x)$ est égal au profil d'émission cible $S_c(x)$.

Pour cela, selon une approche dite théorique, on commence par déterminer la variation longitudinale $\alpha_{r,c}(x)$ du taux d'extraction cible $\alpha_{r,c}$ pour laquelle le profil d'émission $S(x)$ est égal au profil d'émission cible $S_c(x)$. On peut utiliser la relation théorique identique ou similaire à celle décrite dans l'article de Zhao 2020 mentionné précédemment, à savoir :

$$\alpha_{r,c} = \frac{S_c(x)}{2 \int_x^{\infty} S_c(x)dx}$$

Ensuite, connaissant la variation longitudinale $\alpha_{r,c}(x)$ du taux d'extraction cible $\alpha_{r,c}$, on détermine la variation longitudinale $w_{c,c} = p(x)$ de la largeur $w_c$ du guide d'onde 5 correspondante, à partir de la relation $\alpha_r = g(w_c)$ déterminée précédemment, ainsi que la variation longitudinale $\Lambda_r = q(x)$ à partir de la relation $\Lambda_r = f(w_c)$ déterminée précédemment. Cependant, bien que cette approche 'théorique' puisse être utilisée dans le cadre de l'invention, il y a un risque que la variation longitudinale $w_{c,c}(x)$ de la largeur $w_c$ obtenue ne corresponde pas tout à fait aux contraintes technologiques, et/ou aux valeurs $w_{c,in}$, $w_{c,out}$ de largeur du guide d'onde 5 en amont et en aval de la partie apodisée (par exemple ici 350nm et 600nm).

Aussi, une autre approche avantageuse, plus 'pragmatique', peut être utilisée. On définit tout d'abord une équation représentative d'une variation longitudinale $w_c(x)$ de la largeur $w_c$ du guide d'onde 5 entre deux valeurs prédéfinies amont $w_{c,in}$ et aval $w_{c,out}$. On souhaite que cette équation comprenne peu de paramètres à ajuster (peu de degrés de liberté) mais couvre une large gamme de formes de guide d'onde 5 pour que le profil d'émission correspondant soit égal au profil d'émission cible $S_c(x)$. De préférence, on choisit la fonction puissance d'exposant n, exprimée ici dans une forme continue et dans une forme discrétisée :

$$w_c(x) = w_{c,in} - \left(\frac{x}{L_a}\right)^n \times \left(w_{c,in} - w_{c,out}\right) \quad \Leftrightarrow \quad w_c(i) = w_{c,in} - \left(\frac{i}{M}\right)^n \times \left(w_{c,in} - w_{c,out}\right)$$

où x est l'abscisse qui varie entre $x_0 = 0$, i.e. le début de la partie apodisée de l'antenne optique 7 où la largeur est $w_{c,in}$ et $L_a$, i.e. la fin de la partie apodisée où la largeur est $w_{c,out}$, et où i est le numéro de la période considérée du réseau de diffraction 8, et M le nombre total de périodes de la partie apodisée, et où enfin n est un paramètre libre à déterminer.

On réalise ensuite une étude paramétrique en faisant varier ici le paramètre n. Dans cet exemple, on considère que la partie apodisée de l'antenne optique 7 est formée de M=1000 périodes, suivie d'une partie de 1000 périodes supplémentaires où la largeur $w_c$ et le pas $\Lambda_r$ restent constants (largeur égale à la valeur $w_{c,out}$). On réalise N simulations FDTD de l'antenne optique 7, où le paramètre n prend une valeur $n_{(m)}$, où m est ici un indice variant de 1 à N associé à la simulation réalisée. Ainsi, pour chaque simulation d'indice m, on obtient une variation longitudinale $w_{c(m)}=p_{(m)}(x)$ de la largeur $w_{c(m)}$ à partir de l'équation précédente où le paramètre n prend une valeur $n_{(m)}$. On en déduit également la variation longitudinale $\Lambda_{r(m)}=q_{(m)}(x)$ à partir de la relation $\Lambda_r=f(w_c)$ déterminée précédemment.

On détermine ensuite la variation longitudinale $\alpha_{r(m)}(x)$ du taux d'extraction à partir de la relation $\alpha_r=g(w_c)$, compte tenu des variations longitudinales $w_{c(m)}=p_{(m)}(x)$ et $\Lambda_{r(m)}=q_{(m)}(x)$, et on alors déterminer le profil d'émission $S_{(m)}(x)$ correspondant. On détermine ensuite un paramètre de similitude du profil d'émission $S_{(m)}(x)$ avec le profil d'émission cible $S_c(x)$, autrement dit un paramètre d'écart entre ces deux profils, par exemple à partir d'une intégrale de recouvrement. On choisit enfin la valeur optimale $n_{(mopt)}$ du paramètre n qui donne la meilleure valeur du paramètre de similitude, i.e. qui minimise l'écart entre ces deux profils. On obtient ainsi la variation longitudinale optimale $w_c=p_{(mopt)}(x)$ de la largeur $w_c$ du guide d'onde 5, ainsi que la variation longitudinale correspondante $\Lambda_r=q_{(mopt)}(x)$ du pas $\Lambda_r$ du réseau de diffraction 8, pour lesquelles le profil d'émission $S(x)$ correspondant est égal au profil d'émission cible $S_c(x)$ (au sens de la meilleure similitude) avec un angle d'émission $\theta(x)$ égal à la valeur cible $\theta_c$ constante pour tout x. Ainsi, selon cette approche 'pragmatique', on est assuré que les valeurs locales de la largeur $w_c$, associées aux valeurs locales du pas $\Lambda_r$, respectent effectivement les contraintes technologiques ainsi que les valeurs souhaitées $w_{c,in}$, $w_{c,out}$ de largeur du guide d'onde 5 en amont et en aval de la partie apodisée.

Enfin, lors d'une étape 50, on fabrique l'émetteur optoélectronique 1 pour lequel les antennes optiques 7 présentent toute la même configuration structurelle $Cs_{ref}$, celle-ci étant donc complétée par la variation longitudinale $w_c=p(x)$ de la largeur $w_c$ du guide d'onde 5 et par la variation longitudinale $\Lambda_r=q(x)$ du pas du réseau de diffraction 8 qui viennent d'être déterminées.

La figure 4C illustre le profil d'émission $S(x)$ d'une telle antenne optique 7, ainsi que le profil d'émission cible $S_c(x)$. Dans cet exemple, l'antenne optique 7 comporte une partie apodisée de M=1000 périodes (longueur $L_a$ de 750 $\mu$m environ) suivie d'une partie non apodisée de 1000 périodes supplémentaires (d'une longueur de 850 $\mu$m), avec la configuration structurelle de référence indiqué précédemment. Dans la partie apodisée, la largeur $w_c$ varie entre la valeur amont $w_{c,in}$ égale à 600nm et une valeur aval $w_{c,out}$ de 350nm. Le facteur de remplissage $ff_r$ reste égal à 0.5 suivant l'axe longitudinal X, et le paramètre n est égale à 0.3. De plus, l'angle d'émission cible est ici égal à 8°. Dans la partie amont apodisée allant ici de x=0 à $x=L_a$=750nm environ, le profil d'émission $S(x)$ est gaussien et présente une bonne similitude avec le profil gaussien cible $S_c(x)$. Dans la partie aval non apodisée, le profil d'émission présente une décroissance exponentielle, qui correspond ici également avec le profil cible. On représente par une ligne verticale en pointillé le passage dans l'antenne optique 7 entre la partie apodisée et la partie non apodisée.

Ainsi, le procédé de fabrication permet de réaliser un émetteur optoélectronique 1 dont chaque antenne optique 7, par les variations longitudinales de la largeur $w_c$ du guide d'onde 5 et du pas $\Lambda_r$ du réseau de diffraction 8 sur au moins une partie de la longueur de l'antenne optique 7, émettent un rayonnement lumineux ayant le profil d'émission en champ proche et l'angle d'émission voulus. Le diagramme d'émission en champ lointain correspond ainsi au diagramme souhaité, et est peu divergeant au moins dans le plan XZ. De plus, on évite d'avoir à réaliser un réseau de diffraction ayant des dimensions pas ou peu compatibles avec les contraintes des procédés de fabrication usuels des plateformes de photonique.

Des modes de réalisation particuliers viennent d'être décrits. Différentes variantes et modifications apparaîtront à l'homme du métier.

Ainsi, le procédé de fabrication peut également comporter une phase d'ajustement du facteur de remplissage ff, voire de détermination d'une variation longitudinale ff(x), une phase d'ajustement de la longueur de la partie d'apodisation, ou d'autres paramètres physiques Comme indiqué précédemment, le profil d'émission peut être de différents types, par exemple gaussien ou constant. Par ailleurs, le réseau de diffraction 8 peut comporter comme ici des plots 13 de haut indice, voire, entre autres, être formé par des échancrures pratiquées à la surface de la couche de la gaine.

**Revendications**

1.   Procédé de fabrication d'un émetteur optoélectronique (1) à antenne réseau à commande de phase comportant :

◦ un diviseur (3), destiné à être couplé à une source laser (2) ;
◦ une pluralité de guides d'onde (5), couplés au diviseur (3) et s'étendant suivant un axe longitudinal dans un plan principal, formant des bras (4) de l'émetteur optoélectronique (1) ;

◦ une pluralité de déphaseurs (6) et d'antennes optiques (7), disposés dans les bras (4), chaque antenne optique (7) étant formée du guide d'onde (5) correspondant et d'un réseau de diffraction (8) situé au-dessus et à distance du guide d'onde (5) suivant un axe vertical orthogonal au plan principal ;

◦ le procédé comportant les étapes suivantes :

◦ définition (10) d'un profil d'émission cible $S_c(x)$ en champ proche et d'un angle d'émission cible $\theta_c$ d'un rayonnement lumineux émis par chaque antenne optique (7), et d'une configuration structurelle $Cs_{ref}$ desdites antennes optiques (7), comportant : des valeurs de paramètres physiques $Pp_{wg}$ des guides d'onde (5) définissant des propriétés optiques de transmission d'un mode optique provenant de la source laser (2) ; et des valeurs de paramètres physiques $Pp_r$ des réseaux de diffraction (8) définissant des propriétés optiques de diffraction du mode optique ;

◦ détermination (20) d'une relation $\Lambda_r=f(w_c)$ exprimant une évolution du pas $\Lambda_r$ de structurations périodiques du réseau de diffraction (8) en fonction d'une largeur $w_c$ du guide d'onde (5), de sorte que, compte tenu de ladite configuration structurelle $Cs_{ref}$, un angle d'émission $\theta(x)$ du rayonnement lumineux émis par l'antenne optique (7) est égal audit angle d'émission cible $\theta_c$ ;

v détermination (30) d'une relation $\alpha_r=g(w_c)$ exprimant une évolution d'un taux d'extraction $\alpha_r$ du réseau de diffraction (8) en fonction de la largeur $w_c$ du guide d'onde (5), compte tenu de ladite relation $\Lambda_r=f(w_c)$ et de ladite configuration structurelle $Cs_{ref}$ ;

◦ détermination (40) d'une variation longitudinale $w_c(x)$ de la largeur $w_c$ du guide d'onde (5) et déduction d'une variation longitudinale $\Lambda_r(x)$ correspondante du pas $\Lambda_r$ du réseau de diffraction (8) à partir de ladite relation $\Lambda_r=f(w_c)$, de sorte que, compte tenu de ladite relation $\alpha_r=g(w_c)$ et de ladite configuration structurelle $Cs_{ref}$, un profil d'émission $S(x)$ en champ proche du rayonnement lumineux émis par l'antenne optique (7) est égal audit profil d'émission cible $S_c(x)$ ;

◦ fabrication (50) de l'émetteur optoélectronique (1) dont les antennes optiques (7) présentent la configuration structurelle de référence $Cs_{ref}$, complétée par ladite variation longitudinale $w_c(x)$ de la largeur $w_c$ du guide d'onde (5) et de ladite variation longitudinale $\Lambda_r(x)$ du pas $\Lambda_r$ du réseau de diffraction (8).

**2.** Procédé de fabrication selon la revendication 1, dans lequel les étapes de détermination des relations $\Lambda_r=f(w_c)$ et $\alpha_r=g(w_c)$ sont effectuées pour une gamme de largeur $w_c$ allant d'une valeur minimale $w_{c,out}$ et une valeur maximale $w_{c,in}$ prédéfinies.

**3.** Procédé de fabrication selon la revendication 2, dans lequel l'étape de détermination de la variation longitudinale $w_c(x)$ comporte les opérations suivantes :

• définition d'une fonction puissance d'exposant n représentative d'une variation longitudinale $w_c(x)$ de la largeur $w_c$ entre la valeur maximale $w_{c,out}$ et la valeur minimale $W_{c,in}$ prédéfinies ;

• détermination, pour plusieurs valeurs $n_{(m)}$ de l'exposant n, d'une variation longitudinale $w_c=p_{(m)}(x)$ de la largeur $w_c$ du guide d'onde (5) et déduction d'une variation longitudinale $\Lambda_r=q_{(m)}(x)$ correspondante du pas $\Lambda_r$ du réseau de diffraction (8) ; et

• détermination d'une variation longitudinale $\alpha_{r(m)}(x)$ du taux d'extraction $\alpha_r$ correspondant à partir de ladite relation $\alpha_r=g(w_c)$, puis d'un profil d'émission $S_{(m)}(x)$ correspondant ; puis

• détermination d'une valeur optimale $n_{(mopt)}$ parmi les valeurs $n_{(m)}$ de l'exposant n, pour laquelle le profil d'émission $S_{(mopt)}(x)$ présente un écart minimal vis-à-vis du profil d'émission cible $S_c(x)$.

**4.** Procédé de fabrication selon la revendication 3, dans lequel la fonction puissance est $w_c(x) = W_{c,in} + (x/L_a)^n \times (w_{c,in} - w_{c,out})$, où $L_a$ est la longueur totale de la partie de l'antenne optique (7) qui présente les variations longitudinales de la largeur $w_c$ du guide d'onde (5) et du pas $\Lambda_r$ du réseau de diffraction (8).

**5.** Emetteur optoélectronique (1) à antenne réseau à commande de phase, comportant :

◦ un diviseur (3), destiné à être couplé à une source laser (2) ;

◦ une pluralité de guides d'onde (5), couplés au diviseur (3) et s'étendant suivant un axe longitudinal dans un plan principal, formant des bras (4) de l'émetteur optoélectronique (1) ;

◦ une pluralité de déphaseurs (6) et d'antennes optiques (7) disposés dans les bras (4), chaque antenne optique (7) étant formée du guide d'onde (5) correspondant et d'un réseau de diffraction (8) situé au-dessus et à distance du guide d'onde (5) suivant un axe vertical orthogonal au plan principal ;

◦ **caractérisé en ce que**, sur au moins une partie de la longueur de chaque antenne optique (7) :

• le guide d'onde (5) présente une largeur $w_c=p(x)$ variant longitudinalement selon une fonction p prédéfinie ;

• le réseau de diffraction (8) présente un pas d'agencement $\Lambda_r=q(x)$ de structurations périodiques variant longitudinalement selon une fonction q prédéfinie ;

- les fonctions p et q étant prédéfinies de sorte qu'un profil d'émission S(x) en champ proche du rayonnement lumineux émis par l'antenne optique (7) est égal à un profil d'émission cible $S_c(x)$ prédéfini, et qu'un angle d'émission local θ(x) du rayonnement lumineux émis est égal à un angle d'émission cible $θ_c$ prédéfini, constant longitudinalement.

6. Emetteur optoélectronique (1) selon la revendication 5, dans lequel la fonction p de variation longitudinale de la largeur $w_c$ est une fonction décroissante, et la fonction q de variation longitudinale du pas $Λ_r$ est une fonction croissance.

7. Emetteur optoélectronique (1) selon la revendication 5 ou 6, dans lequel chacune des structurations périodiques s'étend en regard de tous les guides d'onde (5) des antennes optiques (7).

8. Emetteur optoélectronique (1) selon l'une quelconque des revendications 5 à 7, dans lequel les guides d'onde (5) et les réseaux de diffraction (8) sont réalisés dans une puce photonique à base de silicium.

9. Emetteur optoélectronique (1) selon l'une quelconque des revendications 5 à 8, dans lequel les structurations périodiques des réseaux de diffraction (8) présentent une dimension verticale, suivant l'axe vertical, constant suivant l'axe longitudinal des antennes optiques (7).

10. Emetteur optoélectronique (1) selon l'une quelconque des revendications 5 à 9, dans lequel les structurations périodiques des réseaux de diffraction (8) présentent un facteur de remplissage, défini comme le rapport entre une dimension transversale des structurations périodiques suivant l'axe longitudinal sur le pas $Λ_r$, constant suivant l'axe longitudinal des antennes optiques (7).

**Patentansprüche**

1. Verfahren zur Herstellung eines optoelektronischen Emitters (1) mit phasengesteuerter Antennenanordnung, umfassend:

   ○ einen Teiler (3), der dazu bestimmt ist, mit einer Laserquelle (2) gekoppelt zu werden;
   ○ eine Vielzahl von Wellenleitern (5), die mit dem Teiler (3) gekoppelt sind und sich entlang einer Längsachse in einer Hauptebene erstrecken und Arme (4) des optoelektronischen Emitters (1) bilden;
   ○ eine Vielzahl von Phasenschiebern (6) und optischen Antennen (7), die in den Armen (4) angeordnet sind, wobei jede optische Antenne (7) aus dem entsprechenden Wellenleiter (5) und einem Beugungsgitter (8) gebildet ist, das über dem Wellenleiter (5) und in einem Abstand von diesem entlang einer vertikalen Achse orthogonal zur Hauptebene angeordnet ist;
   ○ wobei das Verfahren die folgenden Schritte umfasst:

   ○ Definition (10) eines Ziel-Emissionsprofils $S_c(x)$ im Nahfeld und eines Ziel-Emissionswinkels $θ_c$ einer von jeder optischen Antenne (7) emittierten Lichtstrahlung sowie einer Strukturkonfiguration $Cs_{ref}$ der optischen Antennen (7), die Folgendes umfasst: Werte physikalischer Parameter $Pp_{wg}$ der Wellenleiter (5), die optische Übertragungseigenschaften eines von der Laserquelle (2) kommenden optischen Modus definieren; und Werte physikalischer Parameter $Pp_r$ der Beugungsgitter (8), die optische Beugungseigenschaften des optischen Modus definieren;
   ○ Bestimmung (20) einer Beziehung $Λ_r=f(w_c)$, die eine Veränderung der Schrittweite $Λ_r$ periodischer Strukturierungen des Beugungsgitters (8) in Abhängigkeit von einer Breite $w_c$ des Wellenleiters (5) ausdrückt, so dass unter Berücksichtigung der genannten Strukturkonfiguration $Cs_{ref}$ ein Abstrahlwinkel θ(x) der von der optischen Antenne (7) emittierten Lichtstrahlung gleich dem Soll-Abstrahlwinkel $θ_c$ ist;
   ○ Bestimmung (30) einer Beziehung $α_r=g(w_c)$, die eine Veränderung eines Auskopplungsverhältnisses $α_r$ des Beugungsgitters (8) in Abhängigkeit von der Breite $w_c$ des Wellenleiters (5) unter Berücksichtigung der Beziehung $Λ_r=f(w_c)$ und der Strukturkonfiguration $Cs_{ref}$ ausdrückt;
   ○ Bestimmung (40) einer Längsvariation $w_c(x)$ der Breite $w_c$ des Wellenleiters (5) und Ableitung einer entsprechenden Längsvariation $Λ_r(x)$ des Abstands $Λ_r$ des Beugungsgitters (8) aus der Beziehung $Λ_r=f(w_c)$, so dass unter Berücksichtigung der Beziehung $α_r=g(w_c)$ und der Strukturkonfiguration $Cs_{ref}$ ein Nahfeld-Emissionsprofil S(x) der von der optischen Antenne (7) emittierten Lichtstrahlung gleich dem Soll-Emissionsprofil $S_c(x)$ ist;

∘ Herstellung (50) des optoelektronischen Emitters (1), dessen optische Antennen (7) die Referenzstrukturkonfiguration $Cs_{ref}$ aufweisen, ergänzt durch die Längsänderung $w_c(x)$ der Breite $w_c$ des Wellenleiters (5) und die Längsänderung $\Lambda_r(x)$ des Abstands $\Lambda_r$ des Beugungsgitters (8).

2. Verfahren zur Herstellung gemäß Anspruch 1, wobei die Schritte zum Bestimmen der Beziehungen $\Lambda_r=f(w_c)$ und $\alpha_r=g(w_c)$ für einen Bereich der Breite $w_c$ zwischen einem vordefinierten Minimalwert $w_{c,out}$ und einem vordefinierten Maximalwert $w_{c,in}$ durchgeführt werden.

3. Verfahren zur Herstellung gemäß Anspruch 2, wobei der Schritt zur Bestimmung der Längenänderung $w_c(x)$ folgende Vorgänge umfasst:

   • Definition einer Potenzfunktion mit Exponent n, die einer Längenänderung $w_c(x)$ der Breite $w_c$ zwischen dem vordefinierten Maximalwert $w_{c,out}$ und Minimalwert $w_{c,in}$ repräsentativ ist;
   • Bestimmung einer Längenänderung $w_c=p_{(m)}(x)$ der Breite $w_c$ des Wellenleiters (5) für mehrere Werte $n_{(m)}$ des Exponenten n und Ableitung einer entsprechenden Längenänderung $\Lambda_r=q_{(m)}(x)$ des Abstands $\Lambda_r$ des Beugungsgitters (8); und
   • Bestimmung einer Längsänderung $\alpha_{r(m)}(x)$ des entsprechenden Extraktionsgrades $\alpha_r$ aus der Beziehung $\alpha_r=g(w_c)$ und danach eines entsprechenden Emissionsprofils $S_{(m)}(x)$; dann
   • Bestimmung eines optimalen Wertes $n_{(mopt)}$ unter den Werten $n_{(m)}$ des Exponenten n, für den das Emissionsprofil $S_{(mopt)}(x)$ eine minimale Abweichung vom Soll-Emissionsprofil $S_c(x)$ aufweist.

4. Herstellungsverfahren nach Anspruch 3, wobei die Leistungsfunktion $w_c(x) = w_{c,in} + (x/L_a)^n \times (w_{c,in} - w_{c,out})$ ist, wobei $L_a$ die Gesamtlänge des Teils der optischen Antenne (7) ist, welche die Längsänderungen der Breite $w_c$ des Wellenleiters (5) und des Abstands $\Lambda_r$ des Beugungsgitters (8) aufweist.

5. Optoelektronischer Sender (1) mit phasengesteuerter Antennenanordnung, mit:

   ∘ einem Teiler (3), der mit einer Laserquelle (2) zu koppeln ist;
   ∘ eine Vielzahl von Wellenleitern (5), die mit dem Teiler (3) gekoppelt sind und sich entlang einer Längsachse in einer Hauptebene erstrecken und Arme (4) des optoelektronischen Senders (1) bilden;
   ∘ eine Vielzahl von Phasenschiebern (6) und optischen Antennen (7), die in den Armen (4) angeordnet sind, wobei jede optische Antenne (7) aus dem entsprechenden Wellenleiter (5) und einem Beugungsgitter (8) gebildet ist, das über dem Wellenleiter (5) und in einem Abstand von diesem entlang einer vertikalen Achse orthogonal zur Hauptebene angeordnet ist;
   ∘ **dadurch gekennzeichnet, dass** auf mindestens einem Teil der Länge jeder optischen Antenne (7):

      • der Wellenleiter (5) eine Breite $w_c=p(x)$ aufweist, die in Längsrichtung gemäß einer vordefinierten Funktion p variiert;
      • das Beugungsgitter (8) einen Anordnungsabstand $\Lambda_r=q(x)$ periodischer Strukturen aufweist, die sich in Längsrichtung gemäß einer vordefinierten Funktion q variieren;

         - wobei die Funktionen p und q so vordefiniert sind, dass ein Nahfeld-Emissionsprofil $S(x)$ der von der optischen Antenne (7) emittiert wird, einem vorgegebenen Soll-Emissionsprofil $S_c(x)$ gleich ist und ein lokaler Abstrahlwinkel $\theta(x)$ der emittierten Lichtstrahlung einem vorgegebenen, in Längsrichtung konstanten Soll-Abstrahlwinkel $\theta_c$ gleich ist.

6. Optoelektronischer Sender (1) nach Anspruch 5, wobei die Funktion p der Längenänderung der Breite $w_c$ eine abnehmende Funktion ist und die Funktion q der Längenänderung des Abstands $\Lambda_r$ eine zunehmende Funktion ist.

7. Optoelektronischer Sender (1) nach Anspruch 5 oder 6, wobei sich jede der periodischen Strukturen gegenüber allen Wellenleitern (5) der optischen Antennen (7) erstreckt.

8. Optoelektronischer Sender (1) nach einem der Ansprüche 5 bis 7, wobei die Wellenleiter (5) und die Beugungsgitter (8) in einem photonischen Chip auf Basis von Silizium hergestellt sind.

9. Optoelektronischer Sender (1) nach einem der Ansprüche 5 bis 8, wobei die periodischen Strukturen der Beugungsgitter (8) eine vertikale Abmessung entlang der vertikalen Achse aufweisen, die entlang der Längsachse der optischen Antennen (7) konstant ist.

10. Optoelektronischer Sender (1) nach einem der Ansprüche 5 bis 9, wobei die periodischen Strukturen der Beugungsgitter (8) einen Füllfaktor aufweisen, der definiert ist als das Quotient aus einer Querausdehnung der periodischen Strukturen entlang der Längsachse und dem Schritt $\Lambda_r$, der entlang der Längsachse der optischen Antennen (7) konstant ist.

**Claims**

1. A process for fabricating an optical phased array transmitter (1) comprising:

   ○ a splitter (3), intended to be coupled to a laser source (2);
   ○ a plurality of waveguides (5), coupled to the splitter (3) and extending along a longitudinal axis in a main plane, forming arms (4) of the optoelectronic transmitter (1);
   ○ a plurality of phase shifters (6) and optical antennas (7), arranged in the arms (4), each optical antenna (7) being formed by the corresponding waveguide (5) and by a diffraction grating (8) located above and at a distance from the waveguide (5) along a vertical axis orthogonal to the main plane;
   ○ the process comprising the following steps:

   ○ defining (10) a target near-field emission profile $S_c(x)$ and a target emission angle $\theta_c$ for light radiation emitted by each optical antenna (7), and a structural configuration $Cs_{ref}$ of said optical antennas (7), comprising: values of physical parameters $Pp_{wg}$ of the waveguides (5) defining optical properties of transmission of an optical mode from the laser source (2); and values of physical parameters $Pp_r$ of the diffraction gratings (8) defining optical properties of diffraction of the optical mode;
   ○ determining (20) a relationship $\Lambda_r=f(w_c)$ expressing a change in the pitch $\Lambda_r$ of periodic structures of the diffraction grating (8) as a function of a width $w_c$ of the waveguide (5), such that, taking into account said structural configuration $Cs_{ref}$, an emission angle $\theta(x)$ of the light radiation emitted by the optical antenna (7) is equal to said target emission angle $\theta_c$;
   o determining (30) a relationship $\alpha_r=g(w_c)$ expressing a change in an extraction rate $\alpha_r$ of the diffraction grating (8) as a function of the width $w_c$ of the waveguide (5), taking into account said relationship $\Lambda_r=f(w_c)$ and said structural configuration $Cs_{ref}$,
   ○ determining (40) a longitudinal variation $w_c(x)$ in the width $w_c$ of the waveguide (5) and deducing a corresponding longitudinal variation $\Lambda_r(x)$ in the pitch $\Lambda_r$ of the diffraction grating (8) based on said relation-ship $\Lambda_r=f(w_c)$, such that, taking into account said relationship $\alpha_r=g(w_c)$ and said structural configuration $Cs_{ref}$, a near-field emission profile $S(x)$ of the light radiation emitted by the optical antenna (7) is equal to said target emission profile $S_c(x)$;
   ○ fabricating (50) the optoelectronic transmitter (1) whose optical antennas (7) have the reference structural configuration $Cs_{ref}$, supplemented by said longitudinal variation $w_c(x)$ in the width $w_c$ of the waveguide (5) and said longitudinal variation $\Lambda_r(x)$ in the pitch $\Lambda_r$ of the diffraction grating (8).

2. The fabrication process as claimed in claim 1, wherein the steps of determining the relationships $\Lambda_r=f(w_c)$ and $\alpha_r=g(w_c)$ are carried out for a range of widths $w_c$ ranging from a predefined minimum value $w_{c,out}$ and a predefined maximum value $w_{c,in}$.

3. The fabrication process as claimed in claim 2, wherein the step of determining the longitudinal variation $w_c(x)$ comprises the following steps:

   • defining a power function with an exponent n representative of a longitudinal variation $w_c(x)$ in the width $w_c$ between the predefined maximum value $w_{c,out}$ and the predefined minimum value $w_{c,in}$;
   • determining, for multiple values $n_{(m)}$ of the exponent n, a longitudinal variation $w_c=p_{(m)}(x)$ in the width $w_c$ of the waveguide (5) and deducing a corresponding longitudinal variation $\Lambda_r=q_{(m)}(x)$ in the pitch $\Lambda_r$ of the diffraction grating (8); and
   • determining a longitudinal variation $\alpha_{r(m)}(x)$ in the corresponding extraction rate $\alpha_r$ based on said relationship $\alpha_r=g(w_c)$, and then a corresponding emission profile $S_{(m)}(x)$; and then
   • determining an optimum value $n_{(mopt)}$ from among the values $n_{(m)}$ of the exponent n for which the emission profile $S_{(mopt)}(x)$ exhibits a minimum deviation from the target emission profile $S_c(x)$.

4. The fabrication process as claimed in claim 3, wherein the power function is $w_c(x) = w_{c,in} + (x/L_a)^n \times (w_{c,in} - w_{c,out})$, where $L_a$ is the total length of the part of the optical antenna (7) that exhibits the longitudinal variations in the width $w_c$ of the waveguide (5) and the pitch $\Lambda_r$ of the diffraction grating (8).

5. An optical phased array transmitter (1) comprising:

   ○ a splitter (3), intended to be coupled to a laser source (2);
   o a plurality of waveguides (5), coupled to the splitter (3) and extending along a longitudinal axis in a main plane, forming arms (4) of the optoelectronic transmitter (1);
   ○ a plurality of phase shifters (6) and optical antennas (7) arranged in the arms (4), each optical antenna (7) being formed by the corresponding waveguide (5) and by a diffraction grating (8) located above and at a distance from the waveguide (5) along a vertical axis orthogonal to the main plane;
   ○ **characterized in that**, over at least part of the length of each optical antenna (7):

   • the waveguide (5) has a width $w_c=p(x)$ that varies longitudinally according to a predefined function p;
   • the diffraction grating (8) has an arrangement pitch $\Lambda_r=q(x)$ of periodic structures that varies longitudinally according to a predefined function q;

   - the functions p and q being predefined such that a near-field emission profile S(x) of the light radiation emitted by the optical antenna (7) is equal to a predefined target emission profile $S_c(x)$, and that a local emission angle $\theta(x)$ of the emitted light radiation is equal to a predefined, longitudinally constant target emission angle $\theta_c$.

6. The optoelectronic transmitter (1) as claimed in claim 5, wherein the function p regarding longitudinal variation in the width $w_c$ is a decreasing function, and the function q regarding longitudinal variation in the pitch $\Lambda_r$ is an increasing function.

7. The optoelectronic transmitter (1) as claimed in claim 5 or 6, wherein each of the periodic structures extends facing all of the waveguides (5) of the optical antennas (7).

8. The optoelectronic transmitter (1) as claimed in any one of claims 5 to 7, wherein the waveguides (5) and the diffraction gratings (8) are produced in a silicon-based photonic chip.

9. The optoelectronic transmitter (1) as claimed in any one of claims 5 to 8, wherein the periodic structures of the diffraction gratings (8) have a vertical dimension, along the vertical axis, that is constant along the longitudinal axis of the optical antennas (7).

10. The optoelectronic transmitter (1) as claimed in any one of claims 5 to 9, wherein the periodic structures of the diffraction gratings (8) have a filling factor, defined as the ratio between a transverse dimension of the periodic structures along the longitudinal axis and the pitch $\Lambda_r$, that is constant along the longitudinal axis of the optical antennas (7).

1

4

$\varphi_{ref}=0°$

2

6

4

$\Delta\varphi$

7

6

4

2·$\Delta\varphi$

7

6

4

3·$\Delta\varphi$

7

3

6

7

**Fig.1A**

5

1

2

3

4

6

7

Y

Z       X

**Fig.1B**

**Fig.2A**

**Fig.2B**

**Fig.2C**

$$10 \quad S_c(x) \; ; \; \theta_c$$
$$Cs_{ref} = \{ \, Pp_{wg} = \{ \, n_c \; ; \; n_g \; ; \; e_c \, \} \; ; \; Pp_r = \{ \, n_r \; ; \; n_{mr} \; ; \; e_r \; ; \; w_r \; ; \; d_r \; ; \; ff_r \, \} \, \}$$

$$20 \quad \Lambda_r = f( \, w_c \, )_{|Csref} \; / \; \theta(x) = \theta_c$$

$$30 \quad \alpha = g( \, w_{c|\Lambda r} \, )_{|Csref}$$

$$40 \quad w_c = p(x) \Rightarrow \Lambda_r = q(x)$$
$$\{ \, w_c(x) \; ; \; \Lambda_r(x) \, \} \Rightarrow \alpha(x)_{|Csref} \; / \; S(x)_{|Csref} = S_c(x)$$

$$50 \quad Cs_f = \{ \, Pp_{wg} = \{ \, n_c \; ; \; n_g \; ; \; e_c \; ; \; w_c(x) \, \} \; ; \; Pp_r = \{ \, n_r \; ; \; n_{mr} \; ; \; e_r \; ; \; w_r \; ; \; d_r \; ; \; ff_r \; ; \; \Lambda_r(x) \, \} \, \}$$

# Fig.3

**Fig.4A**

**Fig.4B**

**Fig.4C**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10983273 B

- WO 2021130149 A1

**Littérature non-brevet citée dans la description**

- **HULME et al.** Fully integrated hybrid silicon two dimensional beam scanner,. *Opt. Express*, 2015, vol. 23 (5), 5861-5874
- **HAN et al.** Highly directonal waveguide grating antenna for optical phased array,. *Current Applied Physics*, 2018, vol. 18, 824-828
- **WANG et al.** Silicon nitride assisted 1x64 optical phased array based on a SOI platform,. *Opt. Express*, 2021, vol. 29 (7), 10513-10517

- **HULME et al.** Fully integrated hybrid silicon two dimensional beam scanner. *Opt. Express*, 2015, vol. 23 (5), 5861-5874
- **ZHAO et al.** Design principles of apodized grating couplers. *Journal of Lightware Technology*, 2020, vol. 38 (16), 4435-4446
- **MEKIS et al.** A Grating-Coupler-Enabled CMOS Photonics Platform. *IEEE Journal of Selected Topics in Quantum Electronics*, May 2011, vol. 17 (3), 597-608